# EUROPEAN PATENT APPLICATION

(11) **EP 1 391 490 A1**
(43) Date of publication of application: **25.02.2004**
(21) Application number: 03102585.1
(22) Date of filing: 18.08.2003
(51) Int. Cl.: C09D 163/00, C09D 5/03, C09D 167/00, C08G 59/14, C08G 59/28, C08G 59/18, C08G 59/32

(54) **Modified epoxy resins for triboelectric coating processes**

(30) Priority: 23.08.2002 CH 14472002
(71) Applicant: Vantico Gmbh, 4057 Basel (CH)
(72) Inventor: Scharf, Wolfgang, 79639, Grenzach-Wyhlen (DE); Rickert, Christoph, 4153, Reinach (CH)
(74) Representative: Maué, Paul Georg

(57) **Abstract**

Solid epoxy resin characterized in that it has been modified with a secondary amine, the resin having an epoxy value of from 0.25 to 2.2 eq/kg and a nitrogen content occasioned by the secondary amine of from 0.2 to 4.5% by weight; the use of the epoxy resin in powder coating compositions; and powder coating compositions comprising the epoxy resin.

## Description

The present invention relates to modified epoxy resins which are suitable for triboelectric coating processes, to the use of the epoxy resins of the invention in powder coating compositions for the purpose of attaining tribo suitability [i.e. amenability to triboelectric charging] and to powder coating compositions comprising polyester resins and the epoxy resins of the invention.

Essentially there are two methods of charging powder coating materials used to coat workpieces: corona charging and triboelectric charging. Both charging methods are described in the literature, for example in "T.A. Misev, Powder Coatings: Chemistry and Technology, John Wiley & Sons, Chichester, 1991, pages 324-344". Triboelectric charging has a number of advantages, such as absence of high voltage, widely variable film thickness and suitability for the coating of cavities. For a powder coating composition to be able to be used in a tribo-charging process, however, the composition must be able to acquire a sufficient charge. Known methods of obtaining tribo-charging in polyester/epoxy resin blends include the following: a) adding additives (for example EP 0856563); b) modifying the polyesters by adding amines (for example EP 0371528); c) modifying the polyester chain with polyester amides (for example EP 0493355); d) selecting appropriate fillers (for example DE 3600395).

However, the known methods do not provide full satisfaction. In particular, during their reprocessing and their conveying, for example, from the reservoir vessel to the spraying equipment, tribo powder coating materials exhibit changes (fluctuations) in charging behaviour. Moreover, owing to the relatively small amount of conventional tribo additive, its uniform distribution within the powder is difficult to achieve.

The invention accordingly provides solid epoxy resins which have been modified with a secondary amine, the resins having an epoxy value of from 0.25 to 2.2 eq/kg and a nitrogen content, occasioned by the secondary amine, of from 0.2 to 4.5% by weight. Preferred epoxy resins are those having a nitrogen content, occasioned by the secondary amine, of from 0.25 to 2.5% by weight.

It is surprising that powder coating materials based on a polyester-epoxy binder comprising the epoxy resins of the invention are less prone to fluctuations in charging under the influence of changes in the operational parameters. These power coating materials are also more tolerant to excessive curing temperatures (yellowing of the coating is reduced). The tribo-charging of the powder coating material, finally, can be controlled by changing the amount in which the epoxy resins of the invention are added. The epoxy resins of the invention modified with sterically hindered amines in particular are stable on storage despite their nitrogen content. Similarly the storage stability of the finished powder coating materials, which is manifested for example in a slower decrease in the gel time, is improved. These powder coating materials are also less prone to fluctuations in tribo-charging under the influence of moisture (during storage, for example).

Examples of secondary amines which can be used are aliphatic or cycloaliphatic amines having from 2 to 50 carbon atoms. Compounds of the general formula I

HNR₂ (I)

can be used in which R independently at each occurrence is an unsubstituted or substituted alkyl or cycloalkyl radical which is uninterrupted or interrupted by one or more heteroatoms, or both radicals R together are an unsubstituted or substituted alkylene radical which is uninterrupted or interrupted by one or more heteroatoms.

Alkyl is for example C₁-C₁₈-alkyl, especially methyl or propyl.

Cycloalkyl is for example C₅-C₇-cycloalkyl, especially cyclohexyl.

Alkylene is for example C₄-C₁₈-alkylene, especially tetramethylene to octadecamethylene and very particularly tetramethylene or pentamethylene.

Alkylene interrupted by one or more heteroatoms is for example -NH- and/or -O-interrupted C₄-C₁₈-alkylene, especially -CH₂-CH₂-NH-CH₂-CH₂-.

Examples of suitable substituents include the following: C₁-C₁₈-alkyl, C₁-C₁₈-alkoxy, hydroxyl, =O, halogen or 4-oxyl-2,2,6,6-tetramethylpiperidine, it being possible for the said alkyl and alkoxy radicals to be substituted in turn in the manner stated.

Halogen is for example Cl, Br or I, especially Cl.

Substituted alkyl is especially hydroxypropyl.

Alkylene substituted and/or interrupted by one or more heteroatoms is especially -C(CH₃)₂-CH₂-C(OH)H-CH₂-C(CH₃)₂-, -C(CH₃)₂-CH₂-C(OX)H-CH₂-C(CH₃)₂- with X=

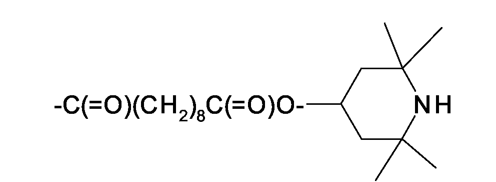

Particularly preferred for modifying the epoxy resins are secondary amines selected from the group consisting of piperazine, bis-2-hydroxypropylamine, dicyclohexylamine, 4-hydroxy-2,2,6,6-tetramethylpiperidine and bis(2,2,6,6-tetramethylpiperidyl) sebacate.

Especially preferred modified epoxy resins are those containing a 2,2,6,6-tetramethylpiperidine radical.

The epoxy resins are modified in a manner known per se to the skilled worker. One general procedure involves heating a polyepoxide compound until a low-viscosity liquid is obtained, at which point the secondary amine and, if desired, a chain extender are added. Following the addition of a catalyst the temperature is raised and the reaction is ended when the desired epoxide value has been reached.

The present invention further provides a powder coating composition based on an epoxy resin binder or polyester-epoxy resin binder containing from 5 to 90% by weight, preferably from 10 to 80% by weight, of the epoxy resin of the invention, based on the total amount of binder.

The present invention further provides a powder coating composition based on an epoxy resin binder containing from 5 to 99% by weight, preferably from 10 to 80% by weight, of the epoxy resin of the invention, based on the total amount of binder.

The present invention further provides for the use of the epoxy resin of the invention in powder coating compositions, especially those based on a polyester-epoxy resin binder, for attaining tribo suitability. Tribo suitability is generally regarded as being possessed by powder coating materials which have a charge of more than 200 µC/kg, in particular a charge of between 200 and 1000 µC/kg.

Epoxy resins suitable for preparing the compositions of the invention are those which are common in the epoxy resins art. Examples of epoxy resins are:
I) Polyglycidyl and poly(β-methylglycidyl) esters, obtainable by reacting a compound having at least two carboxyl groups in the molecule with epichlorohydrin or β-methylepichlorohydrin, respectively. The reaction takes place appropriately in the presence of bases.
   As compounds having at least two carboxyl groups in the molecule it is possible to use aliphatic polycarboxylic acids. Examples of such polycarboxylic acids are oxalic acid, succinic acid, glutaric acid, adipic acid, pimelic acid, suberic acid, azelaic acid or dimerized or trimerized linoleic acid.
   It is, however, also possible to use cycloaliphatic polycarboxylic acids, such as tetrahydophthalic acid, 4-methyltetrahydrophthalic acid, hexahydrophthalic acid or 4-methylhexahydrophthalic acid, for example.
   Furthermore, aromatic polycarboxylic acids can be used, such as phthalic acid, isophthalic acid or terephthalic acid, for example.
II) Polyglycidyl or poly(β-methylglycidyl) ethers, obtainable by reacting a compound having at least two free alcoholic hydroxyl groups and/or phenolic hydroxyl groups with epichlorohydrin or β-methylepichlorohydrin, respectively, under alkaline conditions or in the presence of an acidic catalyst with subsequent alkali treatment.
   The glycidyl ethers of this type are derived for example from acyclic alcohols, such as from ethylene glycol, diethylene glycol or higher poly(oxyethylene) glycols, propane-1,2-diol or poly(oxypropylene) glycols, propane-1,3-diol, butane-1,4-diol, poly(oxytetramethylene) glycols, pentane-1,5-diol, hexane-1,6-diol, hexan-2,4,6-triol, glycerol, 1,1,1-trimethylolpropane, pentaerythritol, sorbitol, and from polyepichlorohydrins.
   Further glycidyl ethers of this type are derived from cycloaliphatic alcohols, such as 1,4-cyclohexanedimethanol, bis(4-hydroxycyclohexyl)methane or 2,2-bis(4-hydroxycyclohexyl)propane, or from alcohols containing aromatic groups and/or further functional groups, such as N,N-bis(2-hydroxyethyl)aniline or p,p'-bis(2-hydroxyethylamino)diphenylmethane.
   The glycidyl ethers can also be based on mononuclear phenols, such as resorcinol or hydroquinone, or on polynuclear phenols, such as bis(4-hydroxyphenyl)methane, 4,4'-dihydroxybiphenyl, bis(4-hydroxyphenyl) sulphone, 1,1,2,2-tetrakis(4-hydroxyphenyl)ethane, 2,2-bis(4-hydroxyphenyl)propane or 2,2-bis(3,5-dibromo-4-hydroxyphenyl)propane, for example.
   Further suitable hydroxy compounds for the preparation of glycidyl ethers are novolaks, obtainable by condensing aldehydes, such as formaldehyde, acetaldehyde, chloral or furfuraldehyde, with phenols or bisphenols, which are unsubstituted or substituted by chlorine atoms or C₁-C₉-alkyl groups, such as, for example, phenol, 4-chlorophenol, 2-methylphenol or 4-tert-butylphenol.
III) Poly(N-glycidyl) compounds, obtainable by dehydrochlorinating the reaction products of epichlorohydrin with amines containing at least two amine hydrogen atoms. These amines are for example aniline, n-butylamine, bis(4-aminophenyl)methane, m-xylylenediamine or bis(4-methylaminophenyl)methane.
   The poly(N-glycidyl) compounds also include, however, triglycidyl isocyanurate,
   N,N'-diglycidyl derivatives of cycloalkyleneureas, such as ethyleneurea or
   1,3-propyleneurea, and diglycidyl derivatives of hydantoins, such as of 5,5-dimethylhydantoin.
IV) Poly(S-glycidyl) compounds, for example di-S-glycidyl derivatives derived from dithiols, such as ethane-1,2-dithiol or bis(4-mercaptomethylphenyl) ether, for example.
V) Cycloaliphatic epoxy resins, such as bis(2,3-epoxycyclopentyl) ether, 2,3-epoxycyclopentyl glycidyl ether, 1,2-bis(2,3-epoxycyclopentyloxy)ethane or 3,4-epoxycyclohexylmethyl 3',4'-epoxycyclohexanecarboxylate.

It is, however, also possible to use epoxy resins in which the 1,2-epoxide groups are attached to different heteroatoms and/or functional groups; these compounds include for example the N,N,O-triglycidyl derivative of 4-aminophenol, the glycidyl ether glycidyl ester of salicylic acid, N-glycidyl-N'-(2-glycidyloxypropyl)-5,5-dimethylhydantoin or 2-glycidyloxy-1,3-bis(5,5-dimethyl-1-glycidylhydantoin-3-yl)propane.

Particularly preferred for use for preparing the epoxy resins of the invention are bisphenol A diglycidyl ether, bisphenol F diglycidyl ether, mixtures of bisphenol A diglycidyl ether and bisphenol F diglycidyl ether, epoxyurethanes, aliphatic epoxy resins such as trimethylolpropane triglycidyl ether, and cycloaliphatic epoxy resins such as diglycidyl hexahydrophthalate. Very particular preference is given to bisphenol A diglycidyl ether or to mixtures comprising bisphenol A diglycidyl ether.

The modified epoxy resins of the invention have melting points of above room temperature up to about 250°C. The melting points of the modified epoxy resins are preferably situated in the range from 50 to 150°C. Mixtures of modified epoxy resins can also be used.

The polyesters are appropriately solid at room temperature (15 to 35°C) and preferably have a glass transition temperature of from 35 to 120°C, in particular from 40 to 90°C. The polyesters have a molecular weight (number average, Mn), for example, of from 1000 to 15000. The ratio of Mw (weight average of the molecular weight) to Mn is in general between 2 and 10. Examples of highly suitable polyesters are those having free carboxyl groups, a molecular weight (weight average Mw from GPC measurement with polystyrene calibration) of from 4000 to 15000, in particular from 6500 to 11000, and a glass transition temperature (Tg) of from 35 to 120°C, preferably from 40 to 90°C.

The polyesters which can be used possess for example an acid number of from 10 to 100 (indicated in mg of KOH per gram of polyester), which applies to the polyester component as a whole: that is, where two or more different polyesters are used, it corresponds to the average acid number of the totality of these polyesters. Preference is given to compositions of the invention wherein the polyester component has an acid number of in total from 20 to 90 mg KOH/g.

Polyesters, such as those mentioned, are known to the skilled worker and in general are available commercially. Polyesters suitable for the present invention are condensation products of difunctional, trifunctional and/or polyfunctional alcohols (polyols) with dicarboxylic acids and, if desired, trifunctional and/or polyfunctional carboxylic acids, or with corresponding carboxylic anhydrides. Polyols employed include for example ethylene glycol, diethylene glycol, the propylene glycols, butylene glycol, 1,3-butanediol, 1,4-butanediol, neopentanediol, isopentyl glycol, 1,6-hexanediol, glycerol, hexanetriol, trimethylolethane, trimethylolpropane, erythritol, pentaerythritol, cyclohexanediol or 1,4-dimethylolcyclohexane. Examples of suitable dicarboxylic acids include isophthalic acid, terephthalic acid, phthalic acid, methyl-substituted derivatives of the said acids, tetrahydrophthalic acid, methyltetrahydrophthalic acids, e.g. 4-methyltetrahydrophthalic acid, cyclohexanedicarboxylic acids, succinic acid, glutaric acid, adipic acid, pimelic acid, suberic acid, azelaic acid, sebacic acids, dodecanedicarboxylic acid, fumaric acid, maleic acid or 4,4'-biphenyldicarboxylic acid and so on. Examples of suitable tricarboxylic acids are aliphatic tricarboxylic acids, such as 1,2,3-propanetricarboxylic acid, aromatic tricarboxylic acids, such as trimesic acid, trimellitic acid and hemimellitic acid, or cycloaliphatic tricarboxylic acids, such as 6-methylcyclohex-4-ene-1,2,3-tricarboxylic acid. Examples of suitable tetracarboxylic acids are pyromellitic acid or benzophenone-3,3',4,4'-tetracarboxylic acid. Polyesters, especially those available commercially, are very frequently based on neopentyl glycol and/or trimethylolpropane as main alcoholic monomer constituents and on adipic acid and/or terephthalic acid and/or isophthalic acid and/or trimellitic acid as main acid monomer components.

Besides the stated components the compositions of the invention may of course include further components, which may be different depending on the field of application of the compositions and which are known to the skilled worker in the particular field.

Powder coating compositions based on the epoxy resins of the invention may, for example, further comprise additives customary in the coatings industry, in the amounts customary for these additives, which include light stabilizers, curing accelerators, dyes, pigments, e.g. titanium dioxide pigment, devolatilizers, e.g. benzoin, or else additional levelling agents.

Examples of suitable levelling agents are polyvinyl acetals, such as polyvinyl butyral, polyethylene glycol, polyvinylpyrrolidone, glycerol, and acrylic copolymers, as obtainable for example under the names Modaflow® or Acrylron®.

Powder coating materials of the invention can be prepared by simple mixing of the constituents, in a ball mill for example. A different possibility, and one which is preferred, involves melting the constituents together, mixing them and homogenizing them, preferably in an extrusion machine, such as a Buss Kokneter, and subsequently cooling and comminuting the mass. In this context it proves to be particularly advantageous that following their extrusion the powder coating materials of the invention, either immediately or at least after having been left to stand for a few hours, for example from 24 to 48 hours, becomes so hard and brittle that they can easily be ground. The powder coating mixtures preferably have a particle size in the range from 0.1 to 500 µm, in particular from 1 to 100 µm. In certain cases it may also be appropriate first to prepare a masterbatch from fractions of the binder, of the epoxy resins and, where appropriate, of further components and then in a second step to blend and homogenize this masterbatch with the remainder of the binder and the remaining constituents to give the final powder coating composition.

Following their application to the substrate article the powder coating materials are cured at a temperature of at least 100°C, preferably from 150 to 220°C. Curing generally takes about 5 to 60 minutes. Materials suitable for coating are all those which are stable at the temperatures required for curing, particularly ceramics and metals. The substrate here may already have one or more basecoats which are compatible with the powder coating material.

The power coating materials exhibit good levelling in combination with good mechanical properties.

### Examples:

Unless noted otherwise the parts and percentages referred to in the examples and in the remainder of the description are by weight.

### Example 1:

6.00 g of Araldit PT 810® (triglycidyl isocyanurate, epoxide value 9.6 eq/kg; Vantico AG, CH) are dissolved, at 120°C, in 200.00 g of Araldit GY 260® (bisphenol A diglycidyl ether, epoxide value 5.3 eq/kg; Vantico AG, CH). Following dissolution, 15.48 g of 4-hydroxyl-2,2,6,6-tetramethylpiperidine are added. After this is dissolved, 64.03 g of bisphenol A are added. When all the components have dissolved, 0.14 g of 40% strength aqueous catalyst solution (N-methyl-N-ethylpiperidinium iodide, US 4,885,354) is added and the temperature is raised to 170°C. After the exothermic heat has subsided the temperature is raised to 180°C. After the desired epoxide value has been reached (determined in analogy to ISO 3001-1999, 4^{th} Ed.) the reaction mixture is cooled and the resin is discharged.

| | |
|---|---|
| Epoxide value overall | 1.786 eq/kg |
| Nitrogen value | 0.369 eq/kg |
| Epoxide value, corrected | 1.417 eq/kg |

### Example 2:

200.00 g of Araldit GY 260® (bisphenol A diglycidyl ether, epoxide value 5.3 eq/kg; Vantico AG, CH) are heated to 120-130°C and then 15.48 g of 4-hydroxyl-2,2,6,6-tetramethylpiperidine (HTMP) are added, followed, after the latter has dissolved, by 63.78 g of bisphenol A. As soon as all the components have dissolved, 0.14 g of 40% strength aqueous catalyst solution (N-methyl-N-ethylpiperidinium iodide, US 4,885,354) is added and the temperature is raised to 170°C. After the exothermic heat has subsided, the temperature is raised to 180°C. After the desired epoxide value has been reached (determined in analogy to ISO 3001-1999, 4^{th} Ed.) the reaction mixture is cooled and the resin is discharged.

| | |
|---|---|
| Epoxide value overall | 1.699 eq/kg |
| Nitrogen value | 0.344 eq/kg |
| Epoxide value, corrected | 1.355 eq/kg |

### Examples 3 to 9:

The further resins of Table 1 are obtained in analogy to the procedure of Example 1 or 2.

**Table 1:**

| Example No. | 1 | 2 | 3 | 4 | 5 | 6 | 7 | 8 | 9 |
|---|---|---|---|---|---|---|---|---|---|
| Constituents [g] | | | | | | | | | |
| GY 260 | 100 | 100 | 100 | 100 | 100 | 100 | 100 | 100 | 100 |
| PT 810 | 3.0 | 0 | 2.0 | 4.0 | 0 | 0 | 2.0 | 2.0 | 2.0 |
| Bis A | 31.9 | 31.9 | 35.5 | 28.8 | 27.8 | 32.0 | 34.5 | 34.0 | 33.7 |
| HTMP | 7.75 | 7.75 | 3.0 | 14.0 | 6.6 | | | | |
| Diaminophenyltriazine | | | | | 1.0 | | | | |
| t-Butylphenol | | | | | 4.7 | | | | |
| Tinuvin 770 | | | | | | 7.7 | | | |
| Piperazine | | | | | | | 1.4 | | |
| Bis-2-hydroxy-propylamin | | | | | | | | 4.3 | |
| Dicyclohexylamine | | | | | | | | | 5.8 |
| Investigations on the epoxy resin | | | | | | | | | |
| Epoxide value, corrected [eq/kg] | 1.42 | 1.36 | 1.4 | 1.37 | 1.09 | 1.40 | 1.41 | 1.46 | 1.44 |
| N-content from sec. amine [%] | 0.48 | 0.49 | 0.19 | 0.85 | 0.42 | 0.32 | 0.33 | 0.32 | 0.32 |
| | | | | | | | | | |
| Viscosity at 150°C [mPas] | 1920 | 2240 | 2900 | 1200 | 5440 | 2880 | 7040 | 2080 | 1920 |
| Tg [°C] | 53 | 54 | 52 | 50 | 58 | 50 | 55 | 45 | 51 |
| Investigations with the powder coating * | | | | | | | | | |
| Example No. | 1 | 2 | 3 | 4 | 5 | 6 | 7 | 8 | 9 |
| Tribo-charge [µC/kg] | 403 | 557 | 233 | 630 | 507 | 320 | 213 | 223 | 343 |
| 60° gloss [%] | 96 | 96 | 101 | 97 | 93 | 91 | 95 | 86 | 96 |
| Erichsen [mm] | 10.3 | 9.8 | 9.8 | 10.9 | 8.4 | 8.9 | 9.4 | 10.7 | 10.8 |
| Impact [kg/cm²] | >160 | >160 | >160 | >160 | 40 | >160 | >160 | 140 | >160 |
| Adhesion | 0 | 0 | 0 | 0 | 0 | 0 | 0 | 0 | 0 |

| | | | | | | | | | |
|---|---|---|---|---|---|---|---|---|---|
| *A standard powder coating composition is used (80 parts of epoxy resin in accordance with the corresponding Examples 1-9, 20 parts of Araldit GT 2874® (levelling agent masterbatch based on bisphenol A diglycidyl ether, epoxide value 1.15-1.35 eq/kg, Vantico AG, CH), 100 parts of Uralac P 5127® (polyester with an acid number of 69-79, DSM, NL), 100 parts of TiO₂ and 0.8 part of benzoin). The constituents are mixed and the mixture is extruded at 90°C. Following extrusion, the extrudate is ground and sieved. Curing takes place at 200°C for 15 minutes. | | | | | | | | | |

### Determination of the tribo-charging:

The determination is made in accordance with Proc. Int. Conf. Phys. Ser. No. 143, 9^{th} Int.
Conf. On Electrostatics, 2-5 April 1995, 201-205 [air flow 2300 l/h (stp)].

### Determination of the gloss:

The determination is made in analogy to ISO 2813.

### Erichsen Test:

The Erichsen cupping test takes place in accordance with DIN 53156.

### Determination of the impact deformation:

The impact deformation is determined by dropping a die with a weight of 2 kg bearing on its underside a ball with a diameter of 20 mm, with the underside leading, from a certain height from the back (reverse) or from the front onto the coated surface. The figure reported is the product of the weight of the die in kg and the drop height in cm attained before damage to the coating can be found.

Determination of the adhesion:
The determination is made in analogy to DIN 53151.

### Examples 10 and 11:

The procedure is analogous to that for Examples 1, 2 and 3 to 9. The corresponding results are as follows:

**Table 2:**

| Example No. | 10 | 11 |
|---|---|---|
| Constituents [g] | | |
| GY 260 | 100 | 100 |
| Bis A | 29.5 | 25.5 |
| HTMP | 10.5 | 16.0 |
| | | |

| Investigations on the epoxy resin | | |
|---|---|---|
| Epoxide value, corrected [eq/kg] | 1.35 | 1.36 |
| N content from sec. amine [%] | 0.67 | 1.01 |
| Viscosity at 150°C [mPas] | 1500 | 950 |
| Tg [°C] | 53 | 50 |
| | | |

| Investigations with the powder coating* | | |
|---|---|---|
| Tribo-charge [µC/kg] | 689 | 728 |
| 60° gloss [%] | 96 | 97 |
| Erichsen [mm] | 9.7 | 11.0 |
| Impact [kg/cm²] | >160 | >160 |
| Adhesion | 0 | 0 |

| | | |
|---|---|---|
| *Example 10: A standard powder coating composition is used (30 parts of epoxy resin, 10 parts of Araldit GT 2874® (Vantico AG, CH), 60 parts of Uralac P 2610® (polyester with an acid number of 47-57, DSM, NL), 50 parts of TiO₂ and 0.4 part of benzoin). *Example 11: A standard powder coating composition is used (20 parts of epoxy resin, 10 parts of Araldit GT 2874® (Vantico AG, CH), 70 parts of Uralac P 5170® (polyester with an acid number of 32-38, DSM, NL), 50 parts of TiO₂ and 0.4 part of benzoin). | | |

The constituents were mixed and extruded. Following extrusion, the extrudate is ground and sieved. Curing takes place at 200°C for 15 minutes.

### Example 12:

For a standard powder coating composition (80 parts of epoxy resin, 20 parts of GT 2874® (Vantico AG), 100 parts of Uralac P 5127® (polyester with an acid number of 69-79, DSM, NL), 100 parts of TiO₂ and 0.8 part of benzoin) the storage stability is determined by measuring the gel time. The constituents are mixed and extruded. Following extrusion, the extrudate is ground and sieved. Comparison is made using formulations containing 0.3% of amine-based tribo additive (Tinuvin 111FD®, Ciba Spezialitätenchemie, CH; 12a) or tribo-modified polyester (Uralac P 5128®, polyester with an acid number of 69-79, DSM, NL;12b) instead of the Uralac P 5127 polyester. The inventive composition (Example 12) comprises the epoxy resin from Example 2. The comparative compositions comprise Araldit GT 7004® (bisphenol A diglycidyl ether, epoxide value 1.3-1.4 eq/kg; Vantico AG, CH) as epoxy resin.

The gel times at 180°C following storage at 50° C are shown in Table 3.

**Table 3:**

| Example No. | 12 | 12a (Comparative) | 12b (Comparative) |
|---|---|---|---|
| Storage time in weeks | Gel time at 180°C [s] | | |
| 0 | 80 | 114 | 119 |
| 1 | 80 | 103 | 107 |
| 2 | 78 | 98 | 115 |
| 7 | 71 | 87 | 83 |
| 11 | 75 | 82 | 84 |
| 17 | 68 | 66 | 66 |
| Deviation [%] | -15 | -42 | -45 |

### Example 13:

To determine the influence of operational variations on tribo-charging, a standard powder coating composition as in Example 12 is investigated after single and 2-fold extrusion and at different extrusion temperatures. Comparison is made using a composition containing 0.3% of amine-based tribo additive (Tinuvin 111FD®, Ciba Spezialitätenchemie; 13a). The inventive composition (Example 13) comprises the epoxy resin from Example 2. Table 4 summarizes the results.

**Table 4:**

| Example No. | 13 | | 13a (Comparative) | |
|---|---|---|---|---|
| Extrusion temperature [°C] | Extruded 1x | Extruded 2x | Extruded 1x | Extruded 2x |
| | Charge [µC/kg] | | | |
| 70 | 400 | 354 | 533 | 483 |
| 80 | 422 | 383 | 583 | 610 |
| 90 | 354 | 333 | 642 | 554 |
| 100 | 317 | 358 | 544 | 517 |
| 110 | 350 | 328 | 446 | 467 |
| Difference Maximum/Minimum | 105 | 55 | 196 | 143 |

### Example 14:

To determine the effect of moisture during storage on the tribo-charging, a standard powder coating composition as in Example 12 is stored at 23°C and 100%rH. The resin from Example 2 is used. Comparison is made using a composition containing 0.3% of amine-based tribo additive (Tinuvin 111FD®, Ciba Spezialitätenchemie, CH; 14a). Table 5 summarises the results.

**Table 5:**

| Example No. | 14 | | 14a (Comparative) | |
|---|---|---|---|---|
| Storage time [weeks] | [µC/kg] | Difference [%] | [µC/kg] | Difference [%] |
| 0 | 560 | | 800 | |
| 2 | 558 | 0 | 533 | 33 |
| 4 | 529 | 5.5 | 442 | 45 |

### Example 15:

The procedure is analogous to that of Examples 1, 2 and 3 to 11. The results obtained are as follows:

**Table 6:**

| Example No. | 15 | 15a (Comparative) |
|---|---|---|
| Constituents* [g] | | |
| GT 7040 | 26.15 | 46.15 |
| Epoxy resin from Example 11 | 20 | |
| Phenolic novolak hardener | 12.85 | 12.85 |
| TiO₂ (Kronos 2310) | 28.00 | 28.00 |
| BaSO₄ (EWO) | 12.00 | 12.00 |
| Additive: Byk 360P | 1.00 | 1.00 |
| | | |
| Investigations on the epoxy resin | | |
| N content from sec. amine [%] | | |
| | | |
| Investigations with the powder coating* | | |
| Tribo-charge [µC/kg] | 892 | 325 |

| | | |
|---|---|---|
| *Byk 360P ®: Polyacrylate-based levelling additive from Byk-Chemie GmbH, Wesel, DE | | |

## Claims

1. Solid epoxy resin, **characterized in that** it has been modified with a secondary amine, the resin having an epoxy value of from 0.25 to 2.2 eq/kg and a nitrogen content, occasioned by the secondary amine, of from 0.2 to 4.5% by weight.

2. Solid epoxy resin according to Claim 1, **characterized in that** the amine is an aliphatic or cycloaliphatic amine having from 2 to 50 carbon atoms.

3. Solid epoxy resin according to Claim 1, **characterized in that** the amine is a compound of the general formula I
HNR₂ (I)
in which R independently at each occurrence is an unsubstituted or substituted alkyl or cycloalkyl radical which is uninterrupted or interrupted by one or more heteroatoms, or both radicals R together are an unsubstituted or substituted alkylene radical which is uninterrupted or interrupted by one or more heteroatoms.

4. Solid epoxy resin according to Claim 1, **characterized in that** it has been modified with the secondary amine selected from the group consisting of piperazine, bis-2-hydroxypropylamine, dicyclohexylamine, 4-hydroxy-2,2,6,6-tetramethylpiperidine and bis(2,2,6,6-tetramethyl piperidyl) sebacate.

5. Solid epoxy resin according to Claim 1, **characterized in that** it contains a 2,2,6,6-tetramethylpiperidine radical.

6. Use of an epoxy resin according to Claim 1 in powder coating compositions for the purpose of attaining tribo suitability.

7. Use according to Claim 6, **characterized in that** the powder coating compositions are based on a polyester-epoxy resin binder.

8. Use according to Claim 6, **characterized in that** the powder coating compositions are based on an epoxy resin binder.

9. Powder coating composition based on a polyester-epoxy resin binder, containing from 5 to 90% by weight of an epoxy resin according to Claim 1, based on the total amount of binder.
